# EUROPÄISCHE PATENTSCHRIFT

(11) **EP 3 377 858 B1**
(45) Veröffentlichungstag und Bekanntmachung des Hinweises auf die Patenterteilung: **29.09.2021**
(21) Anmeldenummer: 16791353.2
(22) Anmeldetag: 28.10.2016
(51) Int. Cl.: G01C 21/32

(54) **VERFAHREN ZUR AGGREGATION VON FAHRSPURINFORMATIONEN FÜR DIGITALE KARTENDIENSTE**
METHOD FOR AGGREGATING TRAFFIC LANE INFORMATION FOR DIGITAL MAP SERVICES
PROCÉDÉ D'AGRÉGATION D'INFORMATIONS DE VOIES DE CIRCULATION POUR DES SERVICES DE CARTES NUMÉRIQUES

(30) Priorität: 20.11.2015 DE 102015222962
(43) Veröffentlichungstag der Anmeldung: 26.09.2018
(73) Patentinhaber: Robert Bosch GmbH, 70442 Stuttgart (DE)
(72) Erfinder: LEHNER, Philipp, 75417 Muehlacker (DE)
(86) Internationale Anmeldenummer: PCT/EP2016/076015
(87) Internationale Veröffentlichungsnummer: WO 2017/084861

(56) Entgegenhaltungen:
- WO-A1-2010/129192
- WO-A1-2011/079247
- WO-A2-2010/023568
- US-A1- 2008 262 721
- US-A1- 2014 163 875
- US-A1- 2014 278 055
- US-A1- 2015 213 055

## Beschreibung

Die Erfindung betrifft ein Verfahren zur Aggregation von Fahrspurinformationen für die Erstellung und/oder Aktualisierung einer digitalen Straßenkarte.

Des Weiteren betrifft die Erfindung ein Computersystem zur Erstellung bzw. Aktualisierung einer digitalen Straßenkarte.

Die Erfindung betrifft ferner ein Fahrerassistenzsystem in einem Fahrzeug und ein Computersystem zur Erstellung und/oder Aktualisierung einer digitalen Straßenkarte, wobei das Fahrerassistenzsystem zum Datenaustausch in Verbindung mit dem Computersystem steht.

### Stand der Technik

Die WO 2010/023 586 A2 beschreibt ein System.und Verfahren zur Erstellung einer Straßenkarte. Dabei wird eine Vielzahl von Positionsdaten unterschiedlicher Navigationsgeräte, jeweils mit Zeitstempeln versehen, empfangen, sodass der Verlauf einer Straße bzw. eines Fahrweges ermittelt werden kann.

In der US 2008/0262721 A1 wird ein System zur Erstellung einer Karte beschrieben, wobei Fahrzeugpositionen mittels GPS ermittelt bzw. erfasst werden.

Im Straßenverkehr gewinnt die Vernetzung von Fahrzeugen mit serverbasierten Computersystemen, insbesondere Cloud-basierten Serversystemen, stetig an Bedeutung. Insbesondere der Trend zum automatischen Fahren auf öffentlichen Straßen erfordert genaue und aktuelle Informationen über die Fahrzeugumgebung. Die eingeschränkten Sichtbereiche und Detektionsdefizite von Sensorsystemen im Fahrzeug decken zunehmend digitale Karten ab, die von derartigen Serversystemen bzw. den entsprechenden Service-Dienstleistern zur Verfügung gestellt werden.

Andererseits nutzen die Serverdienste wiederum die Daten vieler Fahrzeuge, um Informationen zu gewinnen und die digitale Karte stets an veränderte Bedingungen anzupassen und zu aktualisieren bzw. zu ergänzen.

Für die Aggregation von Fahrspurinformationen werden fortlaufend Positionsinformationen eines Fahrzeugs an ein Computersystem, insbesondere serverbasiertes Computersystem, gesendet. Anhand des zeitlichen Verlaufs der Fahrzeugposition kann die vom Fahrzeug zurückgelegte Trajektorie (der örtliche Verlauf der Fahrzeugbewegung) bestimmt werden. Über die Sammlung von Trajektorien vieler Fahrzeuge kann auf den Verlauf von Fahrspuren bzw. den Streckenverlauf geschlossen werden.

Das Fahrverhalten von Fahrern hängt aber häufig sehr stark von den örtlichen Gegebenheiten und der Verkehrssituation ab. So werden bei geringem Verkehrsaufkommen zum Beispiel Fahrspuren willkürlich gewechselt, Kurven geschnitten oder Abbiegespuren nicht ordnungsgemäß genutzt. Im Stand der Technik bleiben derartige Umstände derzeit oft noch unberücksichtigt. Dabei ergeben sich bei der Erstellung und Aktualisierung digitaler Karten oft Fehler, beispielsweise Streckenverläufe, welche nicht den eigentlichen Verlauf der Fahrspur wiederspiegeln.

### Darstellung der Erfindung: Aufgabe, Lösung, Vorteile

Aufgabe der vorliegenden Erfindung ist es, ein Verfahren zur Aggregation von Fahrspurinformationen für die Erstellung und/oder Aktualisierung einer digitalen Straßenkarte derart weiter zu verbessern, dass die örtlichen Gegebenheiten sowie die Verkehrssituation eines Streckenabschnitts bei der Ermittlung des Streckenverlaufs in besonders geeigneter und zuverlässiger Weise berücksichtigt werden.

Hierfür wird erfindungsgemäß ein Verfahren zur Aggregation von Fahrspurinformationen für die Erstellung und/oder Aktualisierung einer digitalen Straßenkarte vorgeschlagen. Unter Aggregation der Fahrspurinformationen ist ein Ansammeln und Verknüpfen der Fahrspurinformationen, insbesondere der zu ermittelnden Straßenverläufe von Streckenabschnitten, zu verstehen. Das erfindungsgemäße Verfahren ist insbesondere für ein serverbasiertes Computersystem, zum Beispiel ein Cloud-basiertes Serversystem, zu verwenden. Das Computersystem empfängt Informationen von Fahrzeugen und ermittelt basierend auf diesen Informationen Streckenverläufe von Streckenabschnitten und erstellt bzw. aktualisiert damit eine digitale Straßenkarte.

Das erfindungsgemäße Verfahren umfasst zumindest die folgenden Schritte:
a) Erfassen mehrerer Positionskoordinaten eines ersten Fahrzeugs entlang eines Streckenabschnitts. Dabei werden die Positionskoordinaten des ersten Fahrzeugs jeweils zusammen mit den Positionskoordinaten zugeordneten Zeitstempeln erfasst.
b) Erfassen mehrerer weiterer Positionskoordinaten mindestens eines weiteren Fahrzeugs entlang des Streckenabschnitts zusammen mit, den jeweiligen weiteren Positionskoordinaten zugeordneten, Zeitstempeln.

Unter Erfassen der Positionskoordinaten bzw. der weiteren Positionskoordinaten zusammen mit den jeweiligen zugeordneten Zeitstempeln ist insbesondere ein Empfangen der von den jeweiligen Fahrzeugen übermittelten Daten zu verstehen. Die vorgenannten Schritte a) und b) können nacheinander in beliebiger Reihenfolge oder auch gleichzeitig bzw. überlappend durchgeführt werden. Die jeweiligen Positionskoordinaten definieren jeweils einen Ort des Fahrzeugs zu einem bestimmten Zeitpunkt (Zeitstempel). Somit ist unter dem Zeitstempel der Zeitpunkt, an dem sich das jeweilige Fahrzeug an der entsprechenden Position befunden hat, zu verstehen. Jeder Positionskoordinate kann ein Zeitstempel zugeordnet sein.

Die Positionskoordinaten betreffen das erste Fahrzeug. Die so genannten weiteren Positionskoordinaten betreffen das mindestens eine weitere Fahrzeug. Zusätzlich zu dem mindestens einen weiteren Fahrzeug können auch mehrere weitere Fahrzeuge und dessen Positionskoordinaten berücksichtigt werden. Die Zeitstempel der Positionskoordinaten des ersten Fahrzeugs und der weiteren Positionskoordinaten des weiteren Fahrzeugs können identisch oder unterschiedlich sein.

Das erfindungsgemäße Verfahren sieht vor, dass basierend auf den in Schritt a) erfassten Positionskoordinaten des ersten Fahrzeugs und den in Schritt b) erfassten weiteren Positionskoordinaten des mindestens einen weiteren Fahrzeugs ein Streckenverlauf des Streckenabschnitts ermittelt wird. Dabei werden jeweils die Positionskoordinaten des ersten Fahrzeugs und die weiteren Positionskoordinaten des mindestens einen weiteren Fahrzeugs mit Zeitstempeln innerhalb einer identischen oder sich überlappenden Zeitspanne berücksichtigt.

Ein Streckenabschnitt ist ein Abschnitt einer Strecke, zum Beispiel einer Straße, welcher in eine digitale Straßenkarte aufgenommen werden soll oder in einer digitalen Straßenkarte überprüft und aktualisiert werden soll. Erfindungsgemäß wird der Streckenverlauf eines Streckenabschnitts auf Basis der gefahrenen Trajektorie (des örtlichen Verlaufs der Fahrzeugbewegung) des ersten und des mindestens einen weiteren Fahrzeugs ermittelt. Dabei wird erfindungsgemäß nicht nur die Trajektorie des ersten und des mindesten einen weiteren Fahrzeugs entlang desselben Streckenabschnitts berücksichtigt, sondern insbesondere die Trajektorie der Fahrzeuge entlang des Streckenabschnitts innerhalb einer im Wesentlichen identischen Zeitspanne. Unter Berücksichtigung ist zu verstehen, dass die Ermittlung des Streckenverlaufs des Streckenabschnitts in Abhängigkeit der in den Schritten a) und b) erfassten Positionskoordinaten bzw. weiteren Positionskoordinaten mit Zeitstempeln innerhalb einer identischen oder sich überlappenden Zeitspanne bestimmt bzw. berechnet wird.

Das erfindungsgemäße Verfahren schlägt somit vor, neben den Positionskoordinaten des ersten Fahrzeugs mindestens einen weiteren Verkehrsteilnehmer, nämlich die weiteren Positionskoordinaten mindestens eines weiteren Fahrzeugs, in die Bewertung von Trajektorien und die Aggregation der Fahrspurinformationen zu berücksichtigen. Beispielsweise kann dann bei Gegenverkehr davon ausgegangen werden, dass die Kurve nicht geschnitten wurde. Der in einer solchen Situation (beispielsweise bei Gegenverkehr) ermittelte Streckenverlauf eines Streckenabschnitts ist somit weitaus zuverlässiger und kann somit mit einer höheren Gewichtung bzw. Priorität bei der Aggregation der Fahrspurinformationen berücksichtigt werden.

Der Streckenabschnitt ist erfindungsgemäß relativ kurz und somit kleiner als 500 Meter, bevorzugterweise kleiner als 250 Meter, sowie besonders bevorzugterweise kleiner als 100 Meter.

Die Zeitspanne, innerhalb welcher die Positionskoordinaten des ersten Fahrzeugs und die weiteren Positionskoordinaten des mindestens einen weiteren Fahrzeugs zur Ermittlung des Streckenverlaufs eines Streckenabschnitts berücksichtigt werden, beträgt zwischen einer Sekunde und einer Minute, bevorzugterweise zwischen einer Sekunde und 30 Sekunden, sowie besonders bevorzugterweise zwischen einer Sekunde und 15 Sekunden. Eine relativ kurze Zeitspanne bzw. ein relativ kurzer Zeitabschnitt ist besonders vorteilhaft, damit mindestens zwei Fahrzeuge (das erste Fahrzeug und das mindestens eine weitere Fahrzeug) bzw. deren gefahrene Trajektorien im selben Streckenabschnitt zum im Wesentlichen selben Zeitpunkt berücksichtigt werden können. Dann kann in besonders vorteilhafter Weise die Verkehrssituation und die örtliche Gegebenheit berücksichtigt werden. Beispielsweise kann ein kurvenförmiger Streckenverlauf insbesondere dann relativ korrekt ermittelt werden, wenn zwei Fahrzeuge einander entgegenkommen. Dies kann insbesondere dadurch erfasst werden, dass ein relativ kurzer Streckenabschnitt innerhalb einer relativ kurzen Zeitspanne berücksichtigt wird. Passieren dagegen zwei Fahrzeuge in entgegengesetzter Richtung denselben kurvenförmigen Streckenabschnitt im Abstand von einer Minute oder mehr, ist die Berücksichtigung von Positionskoordinaten beider Fahrzeuge wenig aussagekräftig.

Ein weiterer Vorteil liegt auch darin, dass ausschließlich Informationen genutzt werden, die dem Computersystem bereits vorliegen bzw. diesem übermittelt werden. Es sind also keine zusätzlichen Informationen seitens der Fahrzeuge oder andere Informationsquellen erforderlich.

Der Streckenabschnitt kann ein beliebiger Abschnitt einer Strecke, beispielsweise Straße, sein. Bevorzugterweise ist der Streckenabschnitt ein gerader einspuriger Straßenabschnitt, ein gerader mehrspuriger Straßenabschnitt, eine Kurve, eine Einmündung, eine Kreuzung und/oder ein Kreisverkehr. Auch kann der Streckenabschnitt ein Ausschnitt bzw. Teil einer Kurve, einer Einmündung, einer Kreuzung und/oder eines Kreisverkehrs sein.

Es ist bevorzugt, dass in Schritt a) mehrere zeitlich aufeinander folgende Positionskoordinaten des ersten Fahrzeugs und/oder das in Schritt b) mehrere zeitlich aufeinander folgende weitere Positionskoordinaten des mindestens einen weiteren Fahrzeugs erfasst werden. Zeitlich aufeinander folgende Positionskoordinaten bzw. weitere Positionskoordinaten beziehen sich auf die den jeweiligen Positionskoordinaten bzw. weiteren Positionskoordinaten zugeordneten Zeitstempel. Eine kontinuierliche Erfassung bzw. Übermittlung oder ein Empfangen der Positionskoordinaten bzw. der weiteren Positionskoordinaten zusammen mit den jeweiligen zugeordneten Zeitstempeln in vorgegebenen Zeitabständen ist besonders vorteilhaft. Die Zeitabstände können beispielsweise eine Sekunde, zwei Sekunden, fünf Sekunden oder mehr betragen. Besonders vorteilhaft sind relativ kurze Zeitabstände, wie beispielsweise eine Sekunde, zwei Sekunden oder fünf Sekunden.

Auch ist bevorzugterweise vorgesehen, dass die Schritte a) und b) für mehrere aufeinander folgende Streckenabschnitte kontinuierlich wiederholt werden. Der Streckenverlauf wird dann für jeden der aufeinander folgenden Streckenabschnitte ermittelt, wobei basierend auf den einzelnen Streckenverläufen der aufeinander folgenden Streckenabschnitte ein Gesamtstreckenverlauf ermittelt werden kann. Der Gesamtstreckenverlauf kann beispielsweise durch Aneinandersetzen der einzelnen Streckenverläufe für die einzelnen Streckenabschnitte erzeugt werden.

Bei der Ermittlung des Streckenverlaufs eines Streckenabschnitts ist es besonders vorteilhaft, wenn neben den Positionskoordinaten des ersten Fahrzeugs und den weiteren Positionskoordinaten des weiteren Fahrzeugs zusammen mit den jeweiligen Zeitstempeln auch eine Bewegungsrichtung und/oder eine Geschwindigkeit des ersten Fahrzeugs und/oder des mindestens einen weiteren Fahrzeugs berücksichtigt wird. Die jeweilige Bewegungsrichtung und Geschwindigkeit kann basierend auf den ermittelten Positionskoordinaten und den zugeordneten Zeitstempeln errechnet werden oder alternativerweise vom jeweiligen Fahrzeug an das Computersystem übermittelt werden. Die Bewegungsverläufe der Fahrzeuge (des ersten Fahrzeugs und des mindestens einen weiteren Fahrzeugs) können auf Seiten des Computersystems dazu verwendet werden, neue Fahrbahnen in der digitalen Karte hinzuzufügen oder bestehende Fahrbahnen in ihrer Form und Position zu verändern. Dabei werden beispielsweise Trajektorien hinsichtlich Bewegungsrichtung, Position und Verlauf mit in der digitalen Karte vorhandenen Fahrspuren verglichen und zugeordnet. Die zugehörigen Trajektorien können zur Aktualisierung und Verbesserung der Fahrspurdaten in der digitalen Karte herangezogen werden.

Bei der Aggregation der Fahrspurinformationen für die Erstellung und/oder Aktualisierung der digitalen Straßenkarte ist es besonders vorteilhaft, wenn der Streckenverlauf des Streckenabschnitts gewichtet bzw. priorisiert wird. Eine Gewichtung kann in Abhängigkeit unterschiedlichster Kriterien vorgenommen werden. Beispielsweise kann eine Gewichtung in Abhängigkeit der Anzahl der Fahrzeuge in dem Streckenabschnitt innerhalb der vorgegebenen Zeitspanne, in Abhängigkeit der Bewegungsrichtung (Gegenverkehr oder selbe Fahrtrichtung) oder in Abhängigkeit der Geschwindigkeit der Fahrzeuge vorgenommen werden. Auch kann bei der Gewichtung berücksichtigt werden, ob es sich bei dem jeweiligen Streckenabschnitt um einen neuen bzw. noch nicht in der digitalen Karte erfassten Streckenabschnitt handelt oder ob es sich hierbei um einen bereits erfassten Streckenabschnitt handelt, welcher durch die Ermittlung des Streckenverlaufs aktualisiert werden soll.

Es ist ferner vorteilhaft, wenn der Streckenabschnitt in mehrere Segmente unterteilt wird, wobei für die Ermittlung des Streckenverlaufs des Streckenabschnitts Verbindungspunkte zwischen den Segmenten berechnet werden. Diese Vorgehensweise ist insbesondere bei der Aktualisierung einer digitalen Karte bzw. der Aktualisierung einzelner Streckenabschnitte vorteilhaft. Die Segmente können als Liniensegmente, beispielsweise kurze Liniensegmente ausgebildet sein. Beispielsweise können separate Segmente für jede Fahrspur vorgesehen sein und/oder Segmente hintereinander angeordnet und miteinander verbunden sein. Die Verbindungspunkte der einzelnen Segmente stellen sogenannte Stützstellen dar und setzen sich aus den Positionskoordinaten dieser Stützstellen zusammen. Für die Aktualisierung eines Streckenverlaufs eines Streckenabschnitts kann beispielsweise die Fahrspur in kurze Liniensegmente unterteilt werden und die jeweiligen Verbindungspunkte (Stützstellen) mittels einer gewichteten Mittelwertbildung neu berechnet werden. Dabei kann die Gewichtung der Trajektorie eines einzelnen Fahrzeugs deutlich geringer sein als die der Fahrspur in der digitalen Karte. Die Gewichtung der jeweiligen Daten steigt vorteilhafterweise mit deren Konfidenz.

Erfindungsgemäß ist ferner ein Computersystem für die Durchführung eines Verfahrens zur Aggregation von Fahrspurinformationen für die Erstellung und/oder Aktualisierung einer digitalen Straßenkarte gemäß den vorbeschriebenen erfindungsgemäßen und vorteilhaften Verfahrensmerkmalen vorgesehen.

Des Weiteren ist erfindungsgemäß ein Fahrerassistenzsystem in einem Fahrzeug und ein Computersystem für die Durchführung eines Verfahrens zur Aggregation von Fahrspurinformationen für die Erstellung und/oder Aktualisierung einer digitalen Straßenkarte vorgesehen, wobei das Fahrerassistenzsystem zum Datenaustausch in Verbindung mit dem Computersystem, beispielsweise einem serverbasierten Computersystem, steht. Beispielsweise kann für den Datenaustausch eine Internetverbindung über ein mobiles Datennetzwerk zur Verfügung gestellt sein.

Das Fahrerassistenzsystem empfängt vom Computersystem aktualisierte Kartendaten einer digitalen Straßenkarte. Ferner sendet das Fahrerassistenzsystem kontinuierlich Positionsdaten mit zugeordneten Zeitstempeln an das Computersystem zur Erstellung und weiteren Aktualisierung der digitalen Karte. Optional kann das Fahrerassistenzsystem die Informationen, wie beispielsweise die Positionsdaten mit den zugehörigen Zeitstempeln, abspeichern. Beispielsweise kann für den Fall, dass keine ständige Verbindung zum Computersystem besteht, das Fahrerassistenzsystem die Positionskoordinaten mit den zugehörigen Zeitstempeln sowie vorteilhafterweise weiteren Informationen, fahrzeugseitig zwischenspeichern und dann an das Computersystem übermitteln, wenn eine Verbindung erfolgreich hergestellt werden konnte. Es stehen dem Computersystem dann zu einem zeitversetzten Zeitpunkt sämtliche Informationen zur Verfügung, wo sich das jeweilige Fahrzeug zu bestimmten Zeitpunkten befunden hat. Ferner kann das Fahrerassistenzsystem weitere Informationen, beispielsweise Geschwindigkeit und Bewegungsrichtung des Fahrzeugs, ermitteln, speichern und/oder übermitteln.

### Kurze Beschreibung der Zeichnungen

Die Erfindung wird im Folgenden anhand von beispielhaften Streckenverläufen und besonders bevorzugter Ausführungsformen beispielhaft erläutert.

Es zeigen schematisch:
- Figur 1:: einen kurvenförmigen Streckenverlauf eines Streckenabschnitts,
- Figur 2:: eine Kreuzung, nämlich einen Streckenabschnitt bestehend aus einer Ampelkreuzung mit zusätzlicher Abbiegespur,
- Figur 3:: einen Streckenabschnitt mit einem mehrspurigen Straßenverlauf,
- Figur 4:: ein Ablaufdiagramm eines Verfahrens zur Aggregation von Fahrspurinformationen, und
- Figur 5:: ein Computersystem für die Durchführung eines Verfahrens zur Aggregation von Fahrspurinformationen.

### Beispielhafte Streckenverläufe

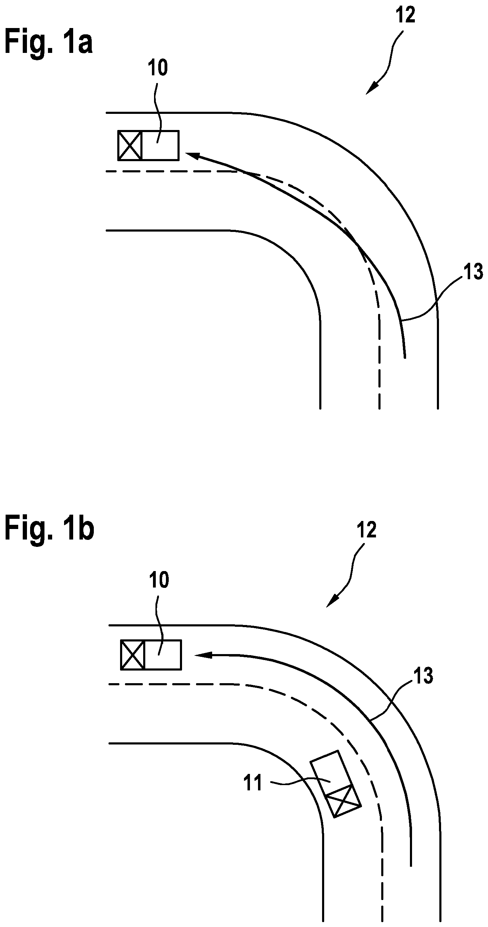

Figuren 1a und 1b zeigen einen kurvenförmigen Streckenverlauf 13 eines Streckenabschnitts 12. In Figur 1a befindet sich während der vorgegebenen Zeitspane lediglich das erste Fahrzeug 10 auf dem Streckenabschnitt 12. Dabei schneidet das erste Fahrzeug 10 die Kurve, da kein Gegenverkehr kommt. Wird der Streckenverlauf 13 dieses Streckenabschnitts 12 basierend auf den vom ersten Fahrzeug 10 in Figur 1a übermittelten Positionskoordinaten ermittelt, würde dies einen falschen oder sehr ungenauen Verlauf der Fahrspur wiederspiegeln.

Figur 1b zeigt zwei Fahrzeuge 10, 11, nämlich das erste Fahrzeug 10 und ein entgegenkommendes weiteres Fahrzeug 11, während derselben Zeitspanne auf dem Streckenabschnitt 12. Aufgrund des Gegenverkehrs kann das erste Fahrzeug 10 die Kurve nicht schneiden. Beide Fahrzeuge 10, 11 übermitteln Positionskoordinaten mit den zugeordneten Zeitstempeln an ein Computersystem 100. Aufgrund der Berücksichtigung der Positionskoordinaten des ersten Fahrzeugs 10 und der weiteren Positionskoordinaten des entgegenkommenden weiteren Fahrzeugs 11 innerhalb derselben Zeitspanne auf demselben Streckenabschnitt 12 kann der Streckenverlauf 13 dieses Streckenabschnitts 12 zuverlässig ermittelt werden.

Es kann somit davon ausgegangen werden, dass die Trajektorie eines Fahrzeugs bei Gegenverkehr mit höherer Konfidenz den Fahrspurverlauf wiedergibt als ohne Gegenverkehr. Entsprechend kann für das in Figur 1b gezeigte Beispiel die Gewichtung der Trajektorie zur Aggregation höher gewählt werden als im Fall ohne Gegenverkehr (vergleiche Figur 1a).

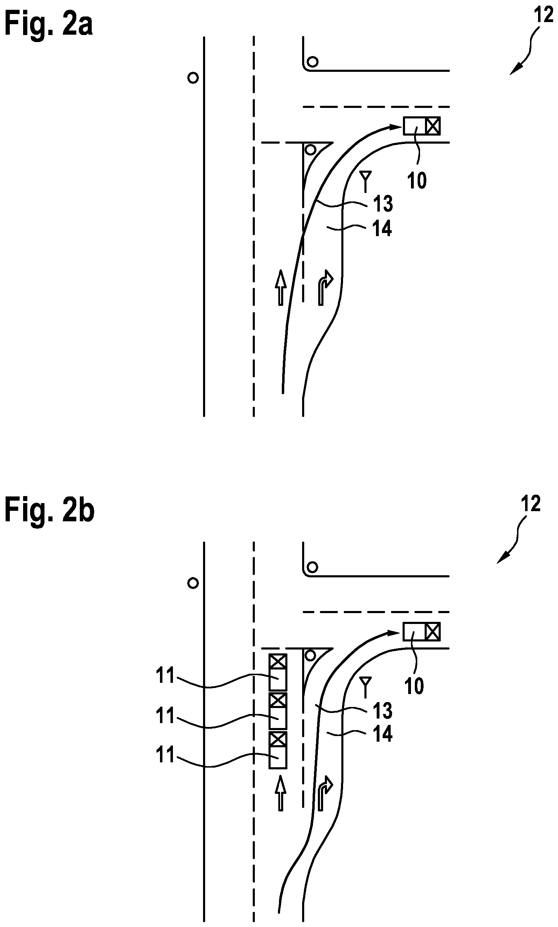

In den Figuren 2a und 2b ist ein Beispiel einer Ampelkreuzung mit Abbiegespur gezeigt. Der Streckenabschnitt 12 besteht somit aus einer Ampelkreuzung mit separater Abbiegespur. Eine Aussage über den Verlauf der Abbiegespur des Streckenabschnitts 12 lässt sich zuverlässiger machen, wenn weitere Fahrzeuge 11 zusätzlich zum ersten Fahrzeug 10 die Spur für das Geradeausfahren teilweise blockieren. Dies ist in Figur 2b beispielhaft dargestellt. Figur 2a zeigt dagegen das Beispiel, dass sich lediglich das erste Fahrzeug 10 während der Zeitspanne auf dem Streckenabschnitt 12 befindet. Wie in Figur 2a gezeigt, kann basierend auf dieser Konstellation nicht zuverlässig der Streckenverlauf 13 des Streckenabschnitts 12 ermittelt werden, da nicht mit Gewissheit festgestellt werden kann, ob das erste Fahrzeug 10 einem ordnungsgemäßen Verlauf der Strecke folgt.

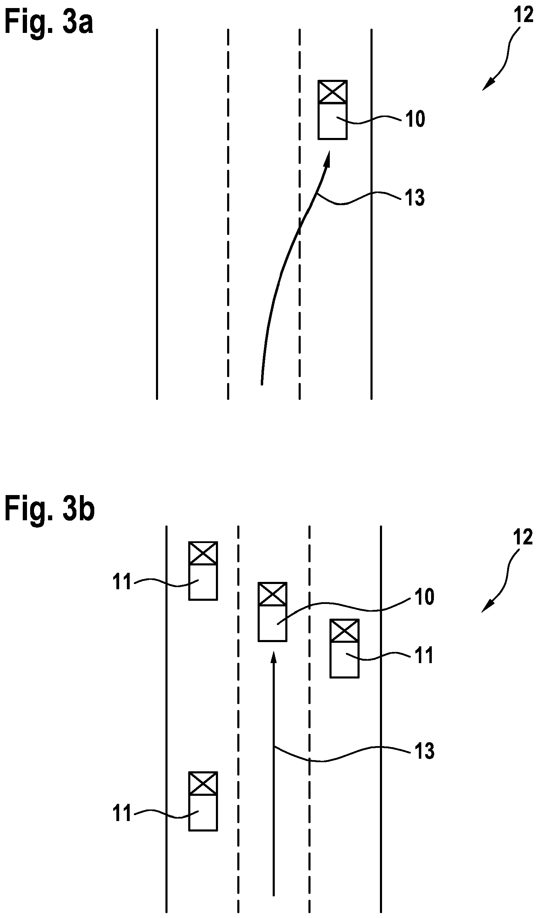

In den Figuren 3a und 3b ist ein Streckenabschnitt bestehend aus einer mehrspurigen Straße dargestellt. Bei einem derartigen Streckenabschnitt bestehen mehrere Schwierigkeiten. Zum einen lässt sich ein Fahrzeug ohne hochgenaue Positionsangaben (was bei Lokalisierung mittels GPS im städtischen Bereich aufgrund von Abschattungen der Satelliten meist nicht gegeben ist) eventuell gar nicht einer Spur zuordnen. Somit ist eine Aggregation schwierig bzw. nicht möglich. Des Weiteren kann es sein, dass ein Fahrzeug, wie beispielsweise in Figur 3a gezeigt, bei leeren Straßen willkürlich Spurwechsel vollzieht und diese sich auch noch über eine längere Distanz erstrecken. Ohne zusätzliche Verkehrsteilnehmer bzw. weitere Fahrzeuge 11 kann, wie im Beispiel 3a gezeigt, der Streckenverlauf 13 des Streckenabschnitts 12 nicht zuverlässig ermittelt werden.

In Figur 3b befinden sich in derselben Zeitspanne mehrere weitere Fahrzeuge 11 auf demselben Streckenabschnitt 12. In dem in Figur 3b gezeigten Beispiel befinden sich Verkehrsteilnehmer auf allen Spuren des mehrspurigen Streckenabschnitts 12 in derselben Richtung. Unter Berücksichtigung sämtlicher Informationen bzw. der Positionskoordinaten sämtlicher Fahrzeuge 10, 11 kann der Streckenverlauf 13 des Streckenabschnitts 12 mit hoher Genauigkeit ermittelt werden. Je nach Position der weiteren Fahrzeuge 11 kann ein Spurwechsel des ersten Fahrzeugs 10 beispielsweise nahezu ausgeschlossen werden. Mit diesem Verfahren kann die Trajektorie sehr gut zur Aggregation von Fahrspurinformationen genutzt werden.

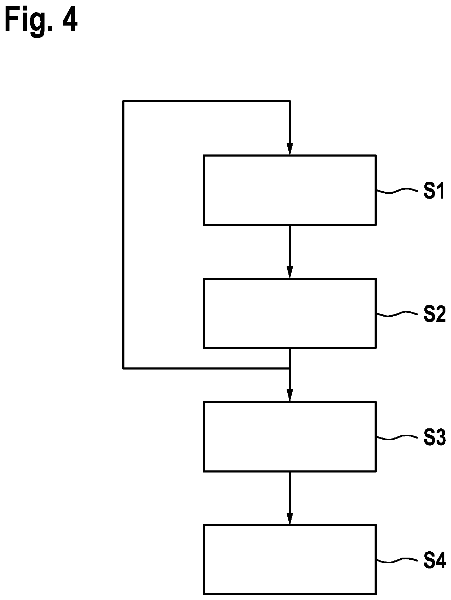

Figur 4 zeigt den beispielhaften Ablauf eines Verfahrens zur Aggregation von Fahrspurinformationen für die Erstellung und/oder Aktualisierung einer digitalen Straßenkarte. In Schritt S1 werden mehrere Positionskoordinaten eines ersten Fahrzeugs 10 entlang eines Streckenabschnitts 12 zusammen mit, den jeweiligen Positionskoordinaten zugeordneten, Zeitstempeln erfasst. In Schritt S2 werden mehrere weitere Positionskoordinaten mindestens eines weiteren Fahrzeugs 11 entlang des Streckenabschnitts 12 zusammen mit, den jeweiligen weiteren Positionskoordinaten zugeordneten, Zeitstempeln erfasst. Die Schritte S1 und S2 können kontinuierlich für aufeinanderfolgende Streckenabschnitte wiederholt werden.

In Schritt S3 wird der Streckenverlauf 13 des Streckenabschnitts 12 basierend auf den in Schritt S1 erfassten Positionskoordinaten des ersten Fahrzeugs 10 und den in Schritt S2 erfassten weiteren Positionskoordinaten des mindestens einen weiteren Fahrzeugs 11 ermittelt. Dabei werden jeweils die Positionskoordinaten des ersten Fahrzeugs 10 und die weiteren Positionskoordinaten des mindestens einen weiteren Fahrzeugs 11 mit Zeitstempeln innerhalb einer identischen oder sich überlappenden Zeitspanne berücksichtigt. In Schritt S4 wird die digitale Straßenkarte aktualisiert und an Fahrerassistenzsysteme 200 der Fahrzeuge 10, 11 übermittelt.

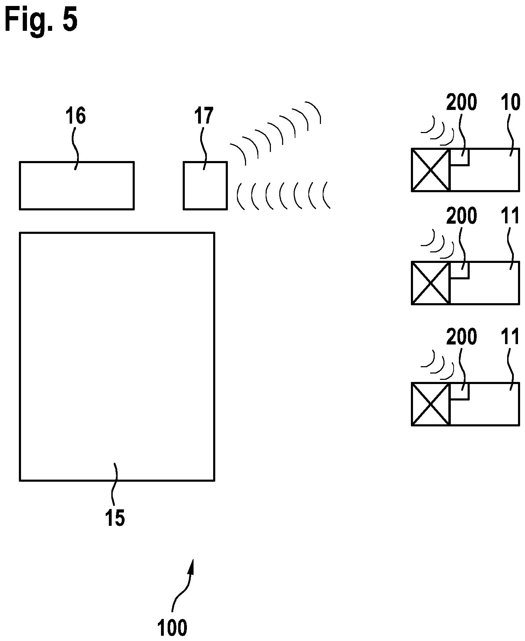

In Figur 5 ist ein Computersystem 100 zur Durchführung eines Verfahrens zur Aggregation von Fahrspurinformationen dargestellt, Das Computersystem 100 weist hierfür zumindest einen Server 15, einen Speicher 16 und eine Sende-/Empfangseinheit 17 auf. Die einzelnen Fahrzeuge 10, 11 weisen jeweils ein Fahrzeugassistenzsystem 200 auf. Das Computersystem 100 empfängt über die Sende-/Empfangseinheit 17 die Positionskoordinaten der Fahrzeuge 10, 11 entlang eines Streckenabschnitts 12. Im Server 15 bzw. mit einer dem Server 15 zugeordneten Recheneinheit wird der Streckenverlauf 13 des Streckenabschnitts 12 basierend auf den erfassten Positionskoordinaten der Fahrzeuge 10, 11 ermittelt und die digitale Straßenkarte aktualisiert. Die aktualisierten Informationen werden im Speicher 16 abgelegt und mittels der Sende-/Empfangseinheit 17 an das Fahrerassistenzsystem 200 des jeweiligen Fahrzeugs 10, 11 übermittelt.

## Patentansprüche

1. Verfahren zur Aggregation von Fahrspurinformationen für die Erstellung und/oder Aktualisierung einer digitalen Straßenkarte, wobei das Verfahren zumindest folgende Schritte aufweist:
a) Erfassen mehrerer Positionskoordinaten eines ersten Fahrzeugs (10) entlang eines Streckenabschnitts (12) zusammen mit, den jeweiligen Positionskoordinaten zugeordneten, Zeitstempeln; und
b) Erfassen mehrerer weiterer Positionskoordinaten mindestens eines weiteren Fahrzeugs (11) entlang des Streckenabschnitts (12) zusammen mit, den jeweiligen weiteren Positionskoordinaten zugeordneten, Zeitstempeln; wobei ein Streckenverlauf (13) des Streckenabschnitts (12) basierend auf den in Schritt a) erfassten Positionskoordinaten des ersten Fahrzeugs (10) und den in Schritt b) erfassten weiteren Positionskoordinaten des mindestens einen weiteren Fahrzeugs (11) ermittelt wird, wobei jeweils die Positionskoordinaten des ersten Fahrzeugs (10) und die weiteren Positionskoordinaten des mindestens einen weiteren Fahrzeugs (11) mit Zeitstempeln innerhalb einer identischen oder sich überlappenden Zeitspanne berücksichtigt werden;
**dadurch gekennzeichnet,**
**dass** die Zeitspanne zwischen 1 Sekunde und 1 Minute liegt, wobei der Streckenabschnitt (12) kleiner als 500 Meter ist.

2. Verfahren gemäß Anspruch 1,
**dadurch gekennzeichnet,**
**dass** der Streckenabschnitt (12) ein gerader einspuriger Straßenabschnitt, ein gerader mehrspuriger Straßenabschnitt, eine Kurve, eine Einmündung, eine Kreuzung und/oder ein Kreisverkehr ist.

3. Verfahren gemäß Anspruch 1 oder 2,
**dadurch gekennzeichnet,**
**dass** in Schritt a) mehrere zeitlich aufeinanderfolgende Positionskoordinaten des ersten Fahrzeugs (10) und/oder dass in Schritt b) mehrere zeitlich aufeinanderfolgende weitere Positionskoordinaten des mindestens einen weiteren Fahrzeugs (11) erfasst werden.

4. Verfahren gemäß einem der vorhergehenden Ansprüche,
**dadurch gekennzeichnet,**
**dass** die Schritte a) und b) für aufeinander folgende Streckenabschnitte (12) kontinuierlich wiederholt werden, wobei in Schritt c) der Streckenverlauf (13) für jeden der aufeinander folgenden Streckenabschnitte (12) ermittelt wird, und basierend auf den Streckenverläufen (13) der aufeinanderfolgenden Streckenabschnitte (12) ein Gesamtstreckenverlauf ermittelt wird.

5. Verfahren gemäß einem der vorhergehenden Ansprüche,
**dadurch gekennzeichnet,**
**dass** die Zeitspanne zwischen 1 Sekunde und 30 Sekunden, sowie besonders bevorzugterweise zwischen 1 Sekunde und 15 Sekunden liegt.

6. Verfahren gemäß einem der vorhergehenden Ansprüche,
**dadurch gekennzeichnet,**
**dass** in Schritt c) bei der Ermittlung des Streckenverlaufs (13) auch eine Bewegungsrichtung und/oder Geschwindigkeit des ersten Fahrzeugs und/oder des mindestens einen weiteren Fahrzeugs berücksichtigt wird.

7. Verfahren gemäß einem der vorhergehenden Ansprüche,
**dadurch gekennzeichnet,**
**dass** bei der Aggregation der Fahrspurinformationen für die Erstellung und/oder Aktualisierung der digitalen Straßenkarte der in Schritt c) ermittelte Streckenverlauf (13) des Streckenabschnitts (12) gewichtet wird.

8. Verfahren gemäß einem der vorhergehenden Ansprüche,
**dadurch gekennzeichnet,**
**dass** der Streckenabschnitt (12) in mehrere Segmente unterteilt wird, wobei für die Ermittlung des Streckenverlaufs (13) des Streckenabschnitts (12) Verbindungspunkte zwischen den Segmenten berechnet werden.

9. Computersystem (100) für die Durchführung eines Verfahrens zur Aggregation von Fahrspurinformationen für die Erstellung und/oder Aktualisierung einer digitalen Straßenkarte gemäß einem der vorhergehenden Ansprüche.

10. Fahrerassistenzsystem (200) in einem Fahrzeug (10, 11) und Computersystem (100) nach Anspruch 9, wobei das Fahrerassistenzsystem (200) zum Datenaustausch in Verbindung mit dem Computersystem (100) steht.

## Claims

1. Method for aggregating lane information for creating and/or updating a digital roadmap, wherein the method comprises at least the following steps:
a) capturing multiple position coordinates of a first vehicle (10) along a route section (12) together with timestamps associated with the respective position coordinates; and
b) capturing multiple further position coordinates of at least one further vehicle (11) along the route section (12) together with timestamps associated with the respective further position coordinates;
wherein
a route profile (13) of the route section (12) is ascertained on the basis of the position coordinates of the first vehicle (10) that are captured in step a) and the further position coordinates of the at least one further vehicle (11) that are captured in step b), wherein in each case the position coordinates of the first vehicle (10) and the further position coordinates of the at least one further vehicle (11) with timestamps within an identical or overlapping period of time are taken into consideration;
**characterized**
**in that** the period of time is between 1 second and 1 minute, the route section (12) being shorter than 500 metres.

2. Method according to Claim 1,
**characterized**
**in that** the route section (12) is a straight singlelane road section, a straight multilane road section, a bend, a junction, a crossroads and/or a roundabout.

3. Method according to Claim 1 or 2,
**characterized**
**in that** step a) involves capturing multiple chronologically successive position coordinates of the first vehicle (10) and/or in that step b) involves capturing multiple chronologically successive further position coordinates of the at least one further vehicle (11).

4. Method according to one of the preceding claims,
**characterized**
**in that** steps a) and b) are continually repeated for successive route sections (12), wherein step c) involves ascertaining the route profile (13) for each of the successive route sections (12), and the route profiles (13) of the successive route sections (12) being taken as a basis for ascertaining an overall route profile.

5. Method according to one of the preceding claims,
**characterized**
**in that** the period of time is between 1 second and 30 seconds, and particularly preferably between 1 second and 15 seconds.

6. Method according to one of the preceding claims,
**characterized**
**in that** the ascertainment of the route profile (13) in step c) also takes account of a direction of movement and/or a speed of the first vehicle and/or the at least one further vehicle.

7. Method according to one of the preceding claims,
**characterized**
**in that** the aggregation of the lane information for creating and/or updating the digital map involves the route profile (13) ascertained for the route section (12) in step c) being weighted.

8. Method according to one of the preceding claims, **characterized in that** the route section (12) is divided into multiple segments, wherein connecting points between the segments are calculated for the ascertainment of the route profile (13) of the route section (12).

9. Computer system (100) for carrying out a method for aggregating lane information for creating and/or updating a digital roadmap according to one of the preceding claims.

10. Driver assistance system (200) in a vehicle (10, 11) and computer system (100) according to Claim 9, wherein the driver assistance system (200) is connected to the computer system (100) for the purpose of data interchange.

## Revendications

1. Procédé d'agrégation d'informations de voie de circulation pour la création et/ou la mise à jour d'une carte routière numérique, le procédé présentant au moins les étapes suivantes consistant à :
a) détecter plusieurs coordonnées de position d'un premier véhicule (10) le long d'un tronçon de route (12) conjointement avec des horodatages associés aux coordonnées de position respectives ; et
b) détecter plusieurs autres coordonnées de position d'au moins un autre véhicule (11) le long du tronçon de route (12) conjointement avec des horodatages associés aux autres coordonnées de position respectives ;
un tracé de route (13) du tronçon de route (12) étant déterminé sur la base des coordonnées de position du premier véhicule (10), détectées à l'étape a), et des autres coordonnées de position de l'au moins un autre véhicule (11), détectées à l'étape b), respectivement les coordonnées de position du premier véhicule (10) et les autres coordonnées de position de l'au moins un autre véhicule (11) avec des horodatages à l'intérieur d'une période de temps identique ou se chevauchant étant prises en compte ;
**caractérisé en ce que** la période de temps est comprise entre 1 seconde et 1 minute, le tronçon de route (12) étant inférieur à 500 mètres.

2. Procédé selon la revendication 1, **caractérisé en ce que** le tronçon de route (12) est un tronçon de route droit à une seule voie, un tronçon de route droit à plusieurs voies, un virage, un embranchement, un carrefour et/ou un rond-point.

3. Procédé selon la revendication 1 ou 2, **caractérisé en ce qu'**à l'étape a), plusieurs coordonnées de position se succédant dans le temps du premier véhicule (10) sont détectées, et/ou **en ce qu'**à l'étape b), plusieurs autres coordonnées de position se succédant dans le temps de l'au moins un autre véhicule (11) sont détectées.

4. Procédé selon l'une quelconque des revendications précédentes, **caractérisé en ce que** les étapes a) et b) sont répétées en continu pour des tronçons de route (12) successifs, dans lequel à l'étape c), le tracé de route (13) est déterminé pour chacun des tronçons de route (12) successifs, et un tracé de route global est déterminé sur la base des tracés de route (13) des tronçons de route (12) successifs.

5. Procédé selon l'une quelconque des revendications précédentes, **caractérisé en ce que** la période de temps est comprise entre 1 seconde et 30 secondes, et de manière particulièrement préférée entre 1 seconde et 15 secondes.

6. Procédé selon l'une quelconque des revendications précédentes, **caractérisé en ce qu'**à l'étape c), lors de la détermination du tracé de route (13), une direction de déplacement et/ou une vitesse du premier véhicule et/ou de l'au moins un autre véhicule sont également prises en compte.

7. Procédé selon l'une quelconque des revendications précédentes, **caractérisé en ce que** lors de l'agrégation des informations de voie de circulation pour la création et/ou la mise à jour de la carte routière numérique, le tracé de route (13) du tronçon de route (12), déterminé à l'étape c), est pondéré.

8. Procédé selon l'une quelconque des revendications précédentes, **caractérisé en ce que** le tronçon de route (12) est divisé en plusieurs segments, dans lequel, pour la détermination du tracé de route (13) du tronçon de route (12), des points de jonction entre les segments sont calculés.

9. Système informatique (100) permettant d'exécuter un procédé d'agrégation d'informations de voie de circulation pour la création et/ou la mise à jour d'une carte routière numérique selon l'une quelconque des revendications précédentes.

10. Système d'assistance au conducteur (200) dans un véhicule (10, 11) et système informatique (100) selon la revendication 9, le système d'assistance au conducteur (200) étant en communication avec le système informatique (100) pour l'échange de données.
